# EUROPEAN PATENT APPLICATION

(11) **EP 2 645 498 A2**
(43) Date of publication of application: **02.10.2013**
(21) Application number: 13161744.1
(22) Date of filing: 28.03.2013
(51) Int. Cl.: H02B 1/01

(54) **Electrical system enclosures**

(30) Priority: 30.03.2012 US 201213435341
(71) Applicant: General Electric Company, Schenectady, New York 12345 (US)
(72) Inventor: Oboza, Rafal Marcin, 43-300 Slaskie (PL); Bedkowski, Jozef Zbigniew, 43-300 Slaskie (PL); Burzynski, Rafal Michal, 43-300 Slaskie (PL); De Cuyper, Johan Rene Sylvain, 9000 Gent (BE); Kowalski, Pawel Piotr, 43-300 Slaskie (PL); Sekula, Mateusz Bartlomiej, 43-300 Slaskie (PL); Tomanek, Tomasz Pawel, 43-300 Slaskie (PL)
(74) Representative: Illingworth-Law, William Illingworth

(57) **Abstract**

A frame 100 for an enclosure includes a first set of corner support structures 101. Each corner support structure of the first set of corner support structures includes a main body 210, a first protrusion 211 arranged to extend from the main body, a second protrusion 212 arranged to extend from the main body and substantially orthogonal to the first protrusion, and a third protrusion 213 arranged to extend from the main body and substantially orthogonal to both the first protrusion and the second protrusion. The frame further includes a second set of corner support structures 102 having mirror image symmetry about a plane of symmetry of an opposing corner support structure of the first set of corner support structures.

## Description

The subject matter disclosed herein relates to an enclosure, more particularly to electrical system enclosures, and even more particularly, exemplary embodiments of the present invention are directed to collapsible and easily transportable frames for electrical system enclosures.

Some electrical system enclosures comprise a stiff, welded unibody construction or a welded frame construction. The welds ensure a particular level of ingress protection which ensures dust, water vapor, and other substances cannot intrude within supportive framing of the enclosures. However, it should be appreciated that as electrical system enclosures are generally of a substantial size, the transportation of such welded enclosures is problematic.

According to an exemplary embodiment of the present invention, a frame for an enclosure includes a first set of corner support structures and a second set of corner support structures, wherein each corner support structure of the second set of corner support structures has mirror image symmetry about a plane of symmetry of an opposing corner support structure of the first set of corner support structures. Furthermore, each corner support structure of the first set of corner support structures includes a main body, a first protrusion arranged to extend from the main body, the first protrusion having a first cross sectional shape and a first annular gasket retention formation arranged thereon, a first annular gasket configured to be arranged on the first annular gasket retention formation, a second protrusion arranged to extend from the main body and substantially orthogonal to the first protrusion, the second protrusion having a second cross sectional shape and a second annular gasket retention formation arranged thereon, a second annular gasket configured to be arranged on the second annular gasket retention formation, a third protrusion arranged to extend from the main body and substantially orthogonal to both the first protrusion and the second protrusion, the third protrusion having a third cross sectional shape and a third annular gasket retention formation arranged thereon, and a third annular gasket configured to be arranged on the third annular gasket retention formation. Furthermore, the first protrusion defines a first axis, the second protrusion defines a second axis, and the first axis and the second axis define the plane of symmetry.

According to another exemplary embodiment of the present invention, a kit for transport of a disassembled frame for an enclosure includes a first set of corner support structures arranged therein. Each corner support structure of the first set of corner support structures includes a main body, a first protrusion arranged to extend from the main body, the first protrusion having a first cross sectional shape and a first annular gasket retention formation arranged thereon, a second protrusion arranged to extend from the main body and substantially orthogonal to the first protrusion, the second protrusion having a second cross sectional shape and a second annular gasket retention formation arranged thereon, and a third protrusion arranged to extend from the main body and substantially orthogonal to both the first protrusion and the second protrusion, the third protrusion having a third cross sectional shape and a third annular gasket retention formation arranged thereon. The kit further includes a second set of corner support structures arranged therein, wherein each corner support structure of the second set of corner support structures includes a main body, a first protrusion arranged to extend from the main body, the first protrusion having a first annular gasket retention formation arranged thereon and being configured to couple to an associated first protrusion of a corner support structure of the first set of corner support structures, a second protrusion arranged to extend from the main body and substantially orthogonal to the first protrusion, the second protrusion having a second annular gasket retention formation arranged thereon and being configured to couple to an associated second protrusion of a corner support structure of the first set of corner support structures, and a third protrusion arranged to extend from the main body and substantially orthogonal to both the first protrusion and the second protrusion, the third protrusion having a third annular gasket retention formation arranged thereon and being configured to couple to an associated third protrusion of a corner support structure of the first set of corner support structures. The kit further includes a plurality of gasket assemblies configured to be arranged therein, wherein each gasket assembly of the plurality of gasket assemblies includes a first annular gasket configured to be arranged on the first annular gasket retention formation of corner support structures of the first and second sets of corner support structures, a second annular gasket configured to be arranged on the second annular gasket retention formation of corner support structures of the first and second sets of corner support structures, and a third annular gasket configured to be arranged on the third annular gasket retention formation of corner support structures of the first and second sets of corner support structures.

These and other advantages and features will become more apparent from the following description taken in conjunction with the drawings.

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 is a perspective view of a supportive frame of an electrical system enclosure, according to an exemplary embodiment;
FIG 2 is a perspective view of a corner support structure of the supportive frame of the electrical system enclosure of FIG. 1;
FIG 3 is a perspective view of a corner support structure of the supportive frame of the electrical system enclosure of FIG. 1;
FIG. 4 is a perspective view of a gasket assembly of the corner support structure of the supportive frame of the electrical system enclosure of FIG. 1;
FIG. 5 is a perspective view of a horizontal framing support member of the supportive frame of FIG. 1;
FIG. 6 is a perspective view of a second horizontal framing support member of the supportive frame of FIG. 1;
FIG. 7 is a perspective view of a vertical framing support member of the supportive frame of FIG. 1;
FIG. 8 is a flowchart of a method of assembling the supportive frame of FIG. 1;
FIG. 9 illustrates a portion of the method of FIG. 8;
FIG. 10 illustrates a portion of the method of FIG. 8;
FIG. 11 illustrates a portion of the method of FIG. 8;
FIG. 12 illustrates a portion of the method of FIG. 8;
FIG. 13 illustrates a portion of the method of FIG. 8;
FIG. 14 illustrates a portion of the method of FIG. 8;
FIG. 15 illustrates a portion of the method of FIG. 8;
FIG. 16 illustrates a portion of the method of FIG. 8;
FIG. 17 illustrates a portion of the method of FIG. 8;
FIG. 18 illustrates a portion of the method of FIG. 8;
FIG. 19 illustrates a portion of the method of FIG. 8;
FIG. 20 illustrates a portion of the method of FIG. 8;
FIG. 21 illustrates a portion of the method of FIG. 8;
FIG. 22 illustrates a portion of the method of FIG. 8;
FIG. 23 illustrates a portion of the method of FIG. 8;
FIG. 24 illustrates a portion of the method of FIG. 8;
FIG. 25 illustrates a portion of the method of FIG. 8;
FIG. 26 illustrates a portion of the method of FIG. 8;
FIG. 27 illustrates a portion of the method of FIG. 8;
FIG. 28 illustrates a portion of the method of FIG. 8;
FIG. 29 is a cross sectional view of a base assembly of the supportive frame of FIG. 1;
FIG. 30 is a perspective view of an alternative corner support structure of the supportive frame of the electrical system enclosure of FIG. 1;
FIG. 31 is a cross sectional view of the alternative corner support of FIG. 30.
FIG. 32 is a perspective view of an alternative corner support of the supportive frame of the electrical system enclosure of FIG. 1;
FIG. 33 is a cross sectional view of the alternative corner support of FIG. 32;
FIG. 34 is an expanded perspective view of the alternative corner support of FIG. 30; and
FIG. 35 is an expanded perspective view of the alternative corner support of FIG. 30.

The detailed description explains embodiments of the invention, together with advantages and features, by way of example with reference to the drawings.

As described above, conventional electrical system enclosures may be problematic in that transportation is cumbersome due to the conventional, fully-assembled welded manner of assembly. However, exemplary embodiments of the present invention provide a solution which significantly reduces a volume required for transport while maintaining an appropriate level of ingress protection as compared to conventional welded enclosures.

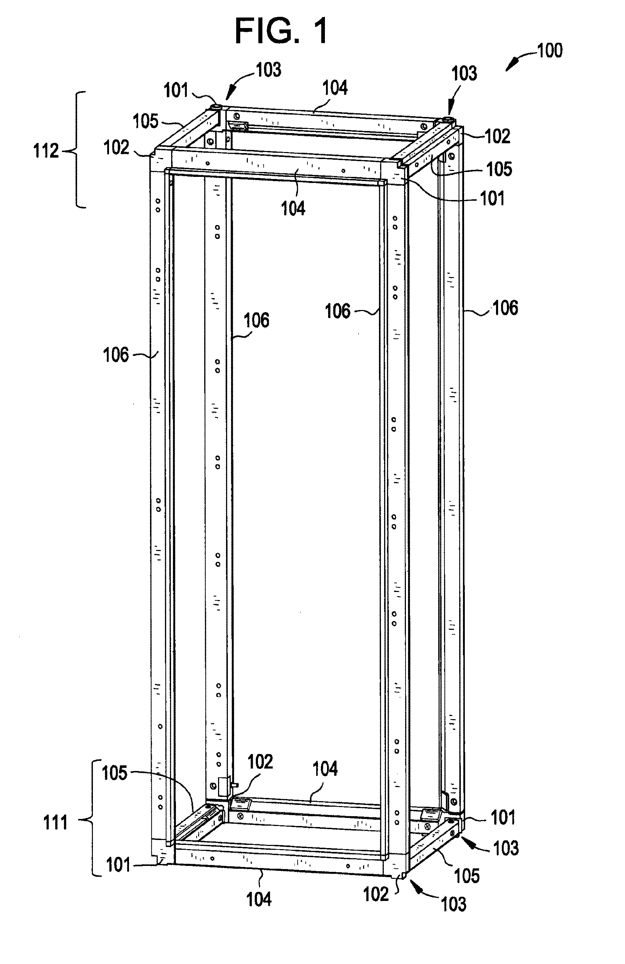

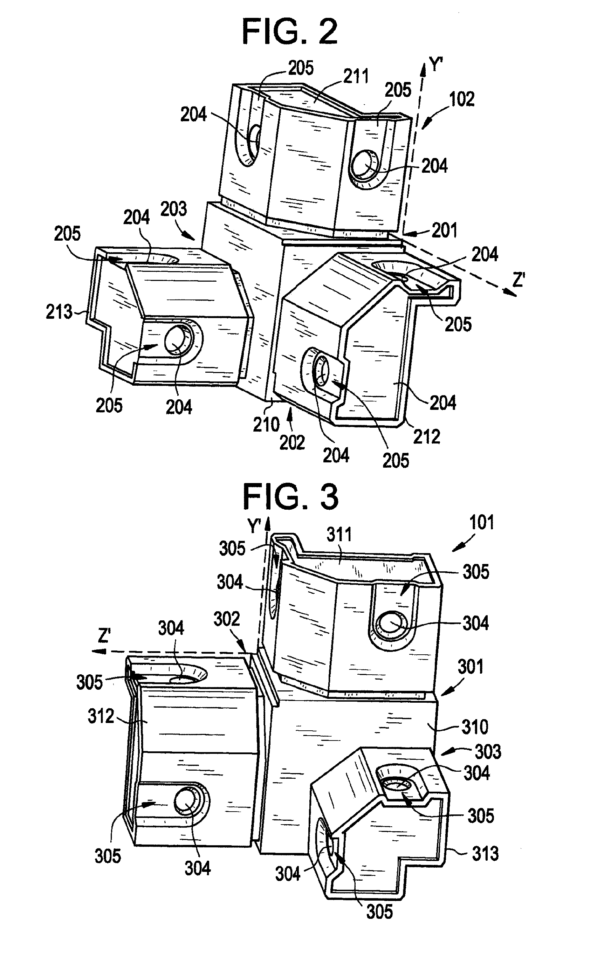

Turning to FIG. 1, a perspective view of a supportive frame of an electrical system enclosure is provided. As illustrated, the frame 100 includes four corner support structures 101 (e.g., a first set of corner support structures), four corner support structures 102 (e.g., a second set of corner support structures), eight gasket assemblies 103, four horizontal framing support members 104, four horizontal framing support members 105, and four vertical framing support members 106. As shown, the corner support structures 101 and 102 engage proximate framing support members 104, 105, and 106 to form the entire frame 100. Generally, the frame 100 includes a base frame portion 111, four vertical support members 106, and roof frame portion 112 which may be assembled separately and/or shipped in a flat-pack box, kit, or any organized packaging of substantially less volume than the fully assembled frame 100. Hereinafter, a more detailed description of each portion of the frame 100 is provided with reference to FIGS. 2-7.

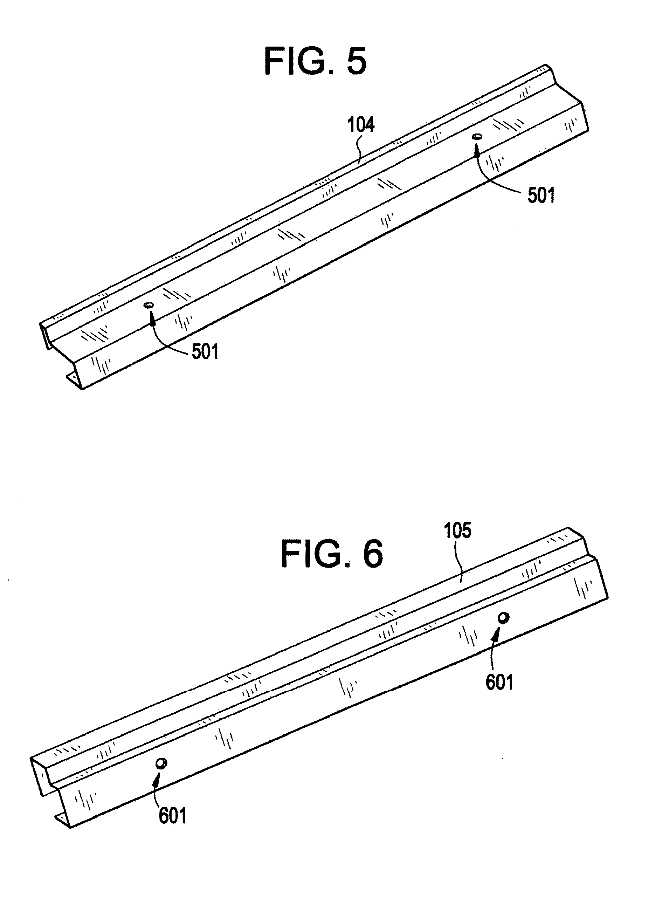

FIG. 2 is a perspective view of the corner support structure 102 of the supportive frame of the electrical system enclosure of FIG. 1. The structure 102 includes a main body 210 and three protrusions 211, 212, and 213 extending therefrom on three main axes, forming a Cartesian corner in three dimensions with each one of the three main axes being substantially perpendicular to its two neighbors. The main body 210 may be of a substantially cubic form, while each of the protrusions 211, 212, and 213 may be shaped according to an associated framing support member (e.g., FIGS. 5-7) such that the associated framing support member may engage therewith. Furthermore, each protrusion 211, 212, and 213 includes an associated gasket retention formation 201, 202, and 203 formed proximate thereto. For example, the protrusion 211 includes a gasket retention formation 201, the protrusion 212 includes a gasket retention formation 202, and the protrusion 213 includes a gasket retention formation 203. Each gasket retention formation may be a generally annular groove encompassing every major surface of an associated protrusion. Therefore, the groove lies on a plane substantially orthogonal to one of the three main axes described above.

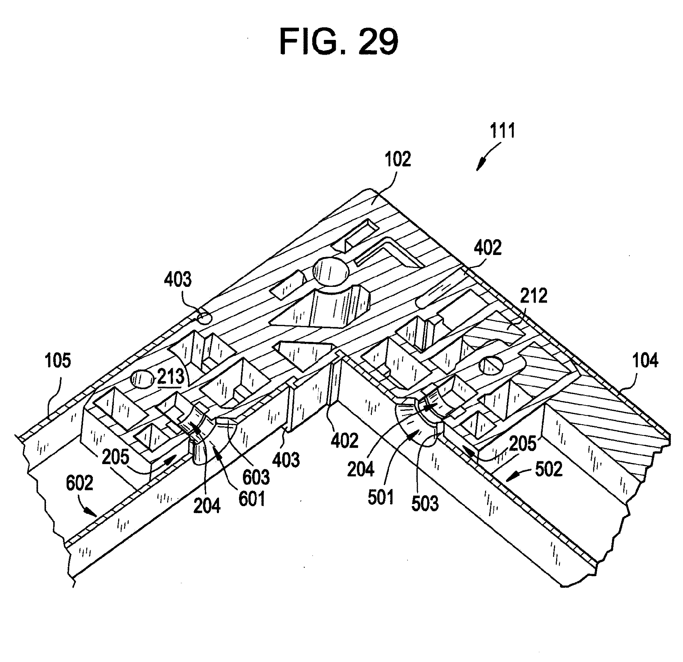

Each of the protrusions 211, 212, and 213 includes at least two holes 204 formed therethrough. Each hole 204 may be countersunk to facilitate smooth assembly of the entire frame 100. Moreover, each hole 204 may be surrounded by an engagement groove 205 configured to engage with an associated framing support member (this is illustrated and described with reference to FIG. 29). Each engagement groove 205 may be a generally rectangular groove formed on an outer surface of an associated protrusion 211, 212, and 213, extending distally from an associated hole 204. Furthermore, each engagement groove 205 may surround an associated hole 204. Moreover, each engagement groove 205 may be configured to engage a countersunk and drawn through-hole from an associated framing support member (this is illustrated and described with reference to FIG. 29). Furthermore, each engagement groove 205 provides for engagement between a hole 204 and an associated through-hole of a support member, for example, by ensuring alignment between holes.

It should be understood that as each of the protrusions 211, 212, and 213 are of a different cross-sectional shape, different corner support structures with mirror-image symmetry are necessary to form opposing corners of the frame 100. For example, the mirror-image symmetry includes a plane of symmetry defined by plane Y'-Z' extending across an outer surface of the main body 210. The plane Y'-Z' is parallel to a first axis defined by the protrusion 211 and parallel to a second axis defined by the protrusion 212. Furthermore, a third axis defined by the protrusion 213 is substantially orthogonal to the plane Y'-Z'. The corner support structure 101 with the mirror-image symmetry is illustrated in FIG. 3.

FIG. 3 is a perspective view of the corner support structure 101 of the supportive frame of the electrical system enclosure of FIG. 1. The structure 101 includes a main body 310 and three protrusions 311, 312, and 313 extending therefrom on three main axes, forming a Cartesian corner in three dimensions with each one of the three main axes being substantially perpendicular to its two neighbors, and complementary to the three main axes associated with corner support structure 102. The main body 310 may be of a substantially cubic form, while each of the protrusions 311, 312, and 313 may be shaped according to an associated framing support member (e.g., FIGS. 5-7) such that the associated framing support member may engage therewith. Furthermore, each protrusion 311, 312, and 313 includes an associated gasket retention formation 301, 302, and 303 formed proximate thereto. For example, the protrusion 311 includes a gasket retention formation 301, the protrusion 312 includes a gasket retention formation 302, and the protrusion 313 includes a gasket retention formation 303. Each gasket retention formation may be a generally annular groove encompassing every major surface of an associated protrusion. Therefore, the groove lies on a plane substantially orthogonal to one of the three main axes described above.

Each of the protrusions 311, 312, and 313 includes at least two holes 304 formed therethrough. Each hole 304 may be countersunk to facilitate smooth assembly of the entire frame 100. Moreover, each hole 304 may be surrounded by an engagement groove 305 configured to engage with an associated framing support member (this is illustrated and described with reference to FIG. 29). Each engagement groove 305 may be a generally rectangular groove formed on an outer surface of an associated protrusion 311, 312, and 313, extending distally from an associated hole 304. Furthermore, each engagement groove 305 may surround an associated hole 304. Moreover, each engagement groove 305 may be configured to engage a countersunk and drawn through-hole from an associated framing support member (this is illustrated and described with reference to FIG. 29). Furthermore, each engagement groove 305 provides for engagement between a hole 304 and an associated through-hole of a support member, for example, by ensuring alignment between holes.

As described above, both corner support structures 102 and 101 have three annular gasket retention formations matching a cross-sectional shape of associated protrusions. Hereinafter, a gasket assembly including a plurality of gaskets is described in detail.

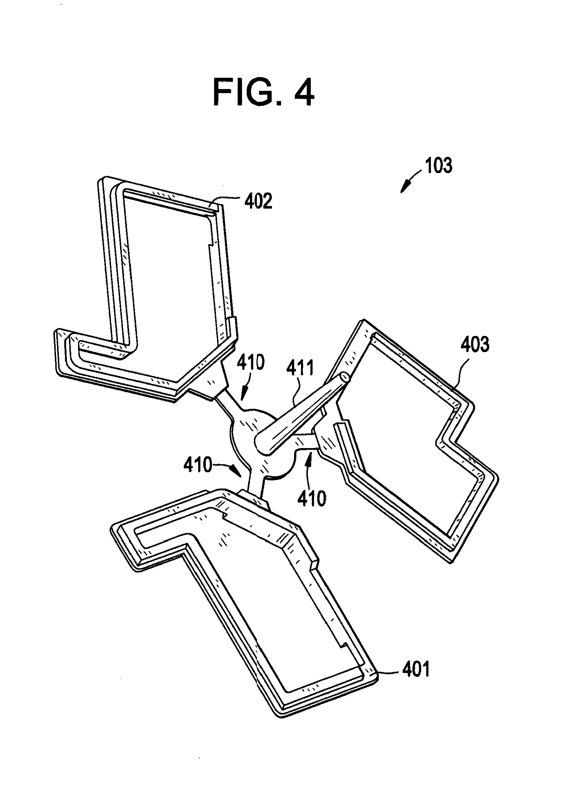

FIG. 4 is a perspective view of the gasket assembly 103 of the corner support structures 101 and 102 of the supportive frame of the electrical system enclosure of FIG. 1. The gasket assembly 103 may be formed of a material suitable for gaskets, such as plastic, elastomeric material, or any suitable material configured to deform in response to applied pressure and force. The gasket assembly 103 may be formed through an injection molding process resulting in remnant 411 and tabs 410 retaining three main gaskets 401, 402, and 403 attached thereto. Each gasket 401, 402, and 403 may be shaped to engage in a particular gasket retention formation such that an appropriate level of sealing, and therefore ingress protection, is provided. For example, gasket 401 is shaped and formed to engage with gasket retention formations 201 and 301. Furthermore, gasket 402 is shaped and formed to engage with gasket retention formations 202 and 302. Moreover, gasket 403 is shaped and formed to engage with gasket retention formations 203 and 303. It should be readily understood that the entire gasket assembly 103 may be easily disassembled by breaking off tabs 410 to free each individual gasket 401, 402, and 403 prior to assembly of the frame 100.

Hereinafter, a more detailed description of individual framing support members is provided with reference to FIGS. 5-7.

FIG. 5 is a perspective view of the horizontal framing support member 104 of the supportive frame of FIG. 1. The support member 104 may be a formed of a suitable material, for example, a metal such as aluminum or steel. The support member 104 may be generally hollow, for example, in the form of a box-channel or c-channel member, with a cross section complementary to a cross section of a particular protrusion of a corner support structure. As used herein complementary cross sections and complementary cross sectional shapes are defined as cross sections or shapes configured to engage one another such that a suitable seal or mechanical coupling is made having structural integrity. For example, support member 104 has a cross sectional shape configured to engage with protrusions 212 and 312 of corner support structures 102 and 101. Furthermore, the support member 104 includes holes 501 positioned relative to associated holes 204 and 304 of corner support structures 102 and 101. The holes 501 may be countersunk and drawn such that a conical protrusion exists on an inner surface of the support member 104, which is configured to engage with engagement grooves 205 and 305 on protrusions 212 and 312 (this is illustrated more clearly in FIG. 29).

FIG. 6 is a perspective view of the horizontal framing support member 105 of the supportive frame of FIG. 1. The support member 105 may be a formed of a suitable material, for example, a metal such as aluminum or steel. The support member 105 may be generally hollow, for example, in the form of a box-channel or c-channel member, with a cross section complementary to a cross section of a particular protrusion of a corner support structure. As used herein complementary cross sections and cross sectional shapes are defined as cross sections or shapes configured to engage one another such that a suitable seal or mechanical coupling is made having structural integrity. For example, support member 105 has a cross sectional shape configured to engage with protrusions 213 and 313 of corner support structures 102 and 101. Furthermore, the support member 105 includes holes 601 positioned relative to associated holes 204 and 304 of corner support structures 102 and 101. The holes 601 may be countersunk and drawn such that a conical protrusion exists on an inner surface of the support member 105, which is configured to engage with engagement grooves 205 and 305 on protrusions 212 and 312 (this is illustrated more clearly in FIG. 29).

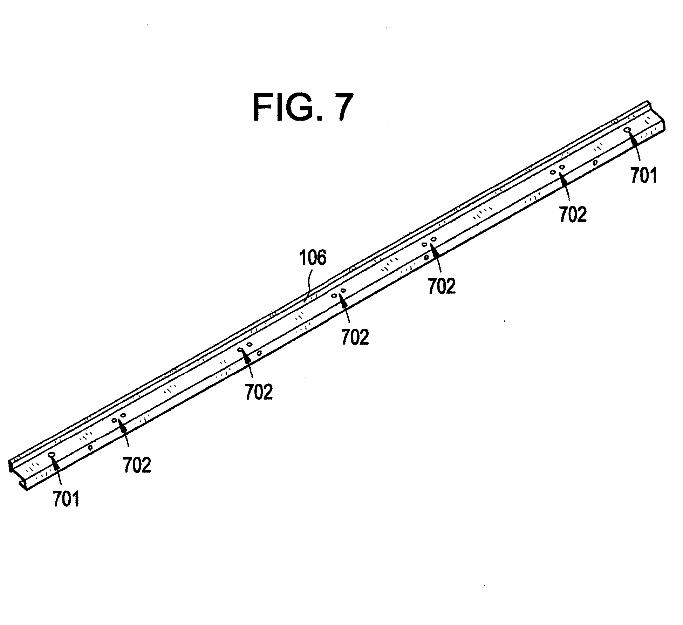

FIG. 7 is a perspective view of the vertical framing support member 106 of the supportive frame of FIG. 1. The support member 106 may be a formed of a suitable material, for example, a metal such as aluminum or steel. The support member 106 may be generally hollow, for example, in the form of a box-channel or c-channel member, with a cross section complementary to a cross section of a particular protrusion of a corner support structure. As used herein complementary cross sections and cross sectional shapes are defined as cross sections or shapes configured to engage one another such that a suitable seal or mechanical coupling is made having structural integrity. For example, support member 106 has a cross sectional shape configured to engage with protrusions 211 and 311 of corner support structures 102 and 101. Furthermore, the support member 106 includes holes 701 positioned relative to associated holes 204 and 304 of corner support structures 102 and 101. The holes 701 may be countersunk and drawn such that a conical protrusion exists on an inner surface of the support member 106, which is configured to engage with engagement grooves 205 and 305 on protrusions 211 and 311 (this is illustrated more clearly in FIG. 29). Moreover, support member 106 further includes a plurality of holes 702 distributed across its surface to allow for mounting a plurality of panels, shelves, electrical components, or any other desired features within a fully assembled enclosure frame 100.

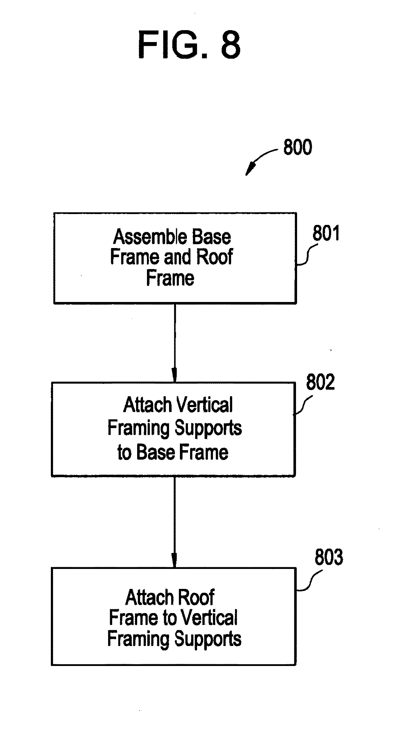

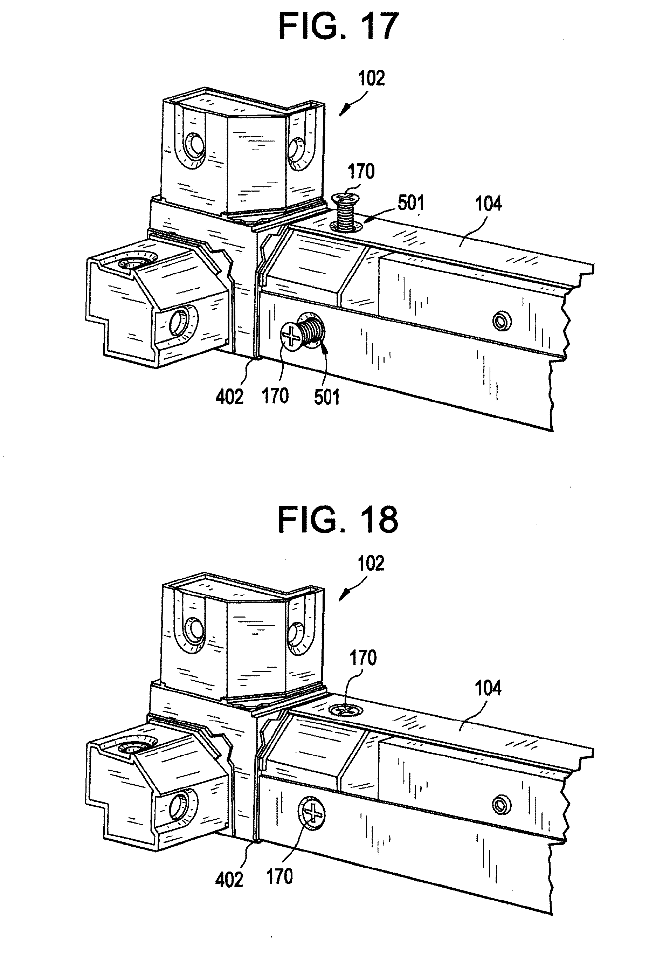

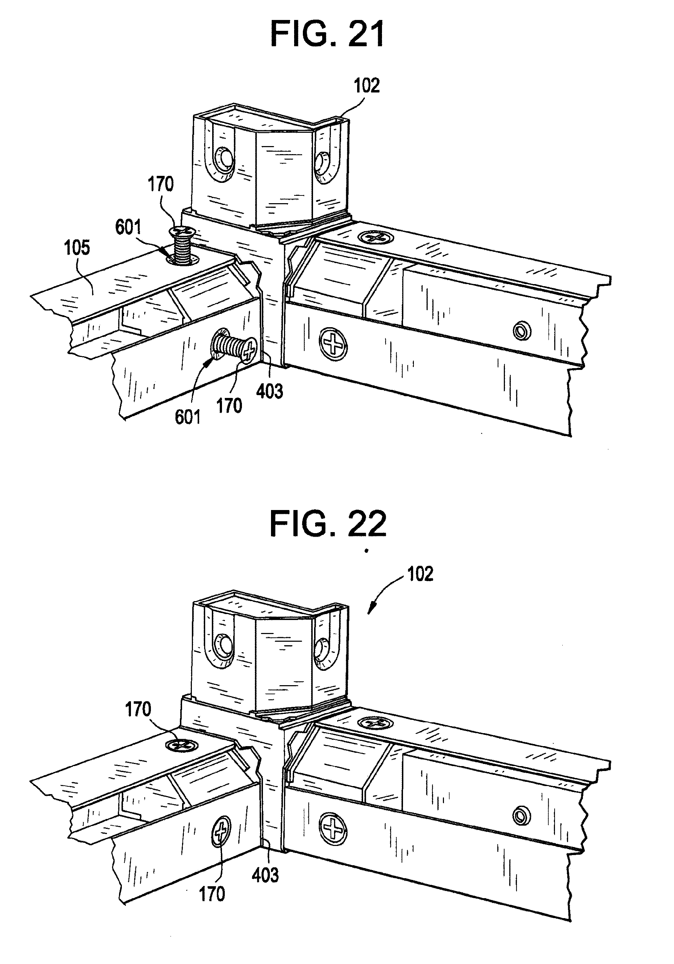

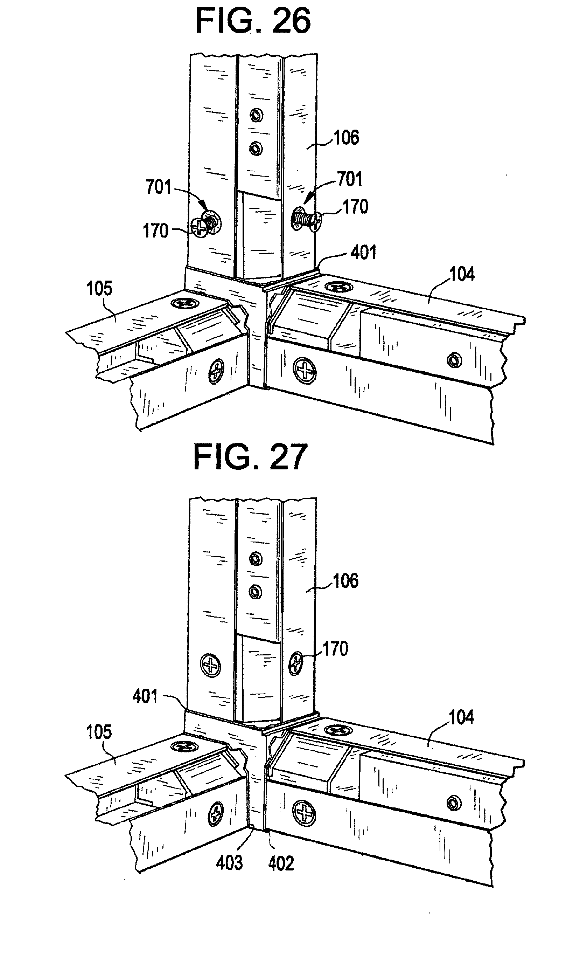

As described above, electrical system enclosure 100 includes a plurality of members, structures, and gaskets configured to allow for assembly of a full supportive frame without welding such that a disassembled frame may be transported in a kit or flat-box of considerably less volume than that of the fully assembled frame. The kit may include all or at least a substantial portion of the elements illustrated in FIG. 1 such that a fully functional frame may be assembled upon delivery of one or more kits. Hereinafter, a method of assembly of an electrical system enclosure frame from a kit is provided with reference to FIGS. 8-28.

FIG. 8 is a flowchart of a method of assembling the frame 100 of FIG. 1, according to an exemplary embodiment. The method 800 includes assembling the base frame portion 111 and assembling the roof frame portion 112 at block 801. The method 800 further includes attaching vertical framing support members 106 to the base frame portion 111 at block 802. Finally, the method 800 includes attaching the roof frame portion 112 to the vertical frame support members 106 at block 803.

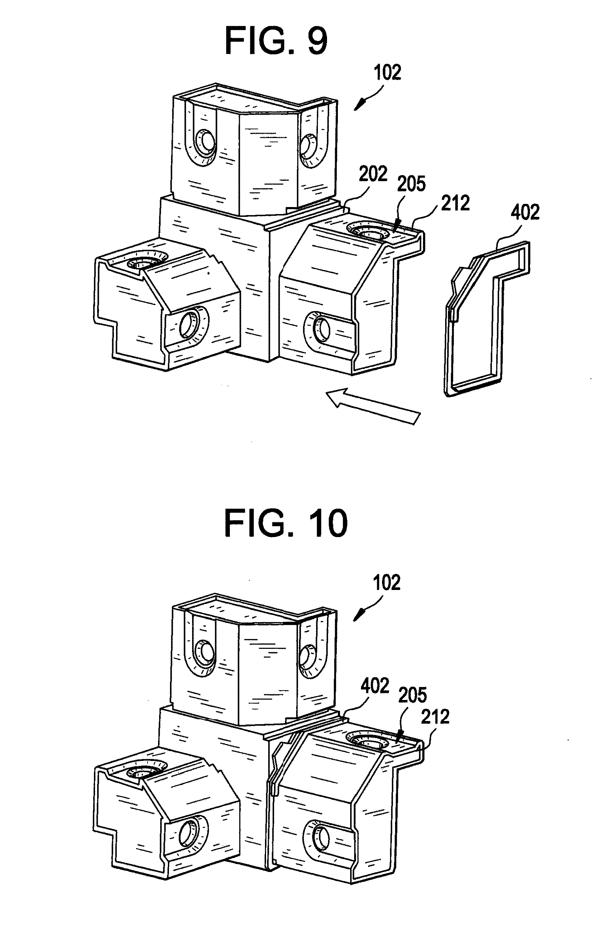

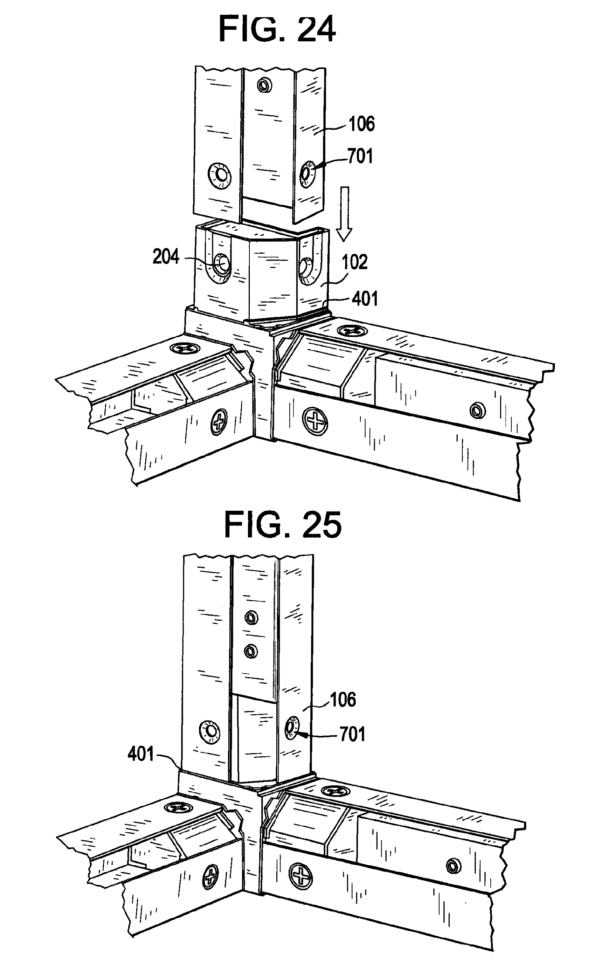

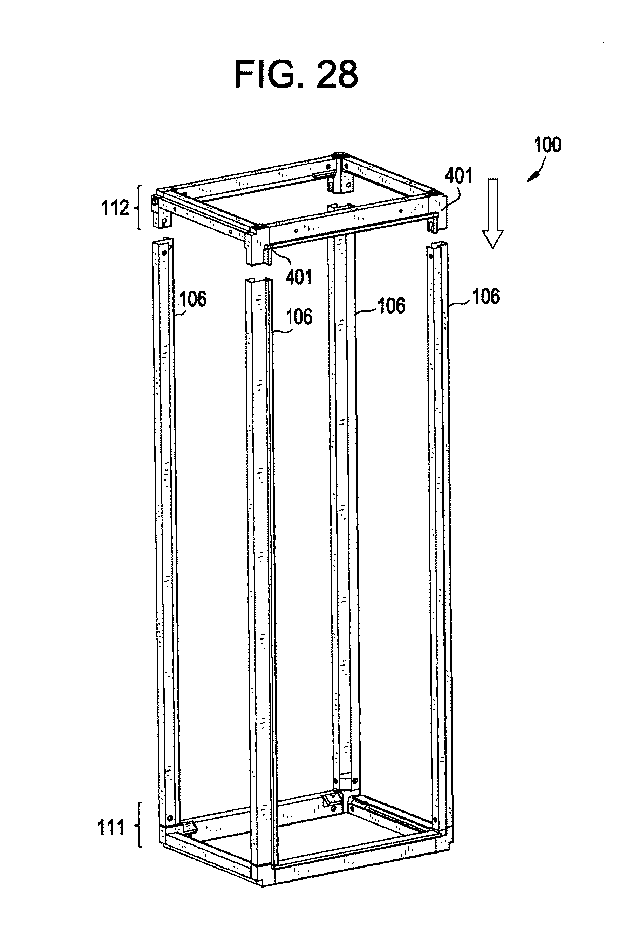

Block 801 is expanded and illustrated within FIGS. 9-23, block 802 is expanded and illustrated within FIGS. 24-27, and block 803 is expanded and illustrated within FIG. 28. Hereinafter, a more detailed description of these blocks is provided.

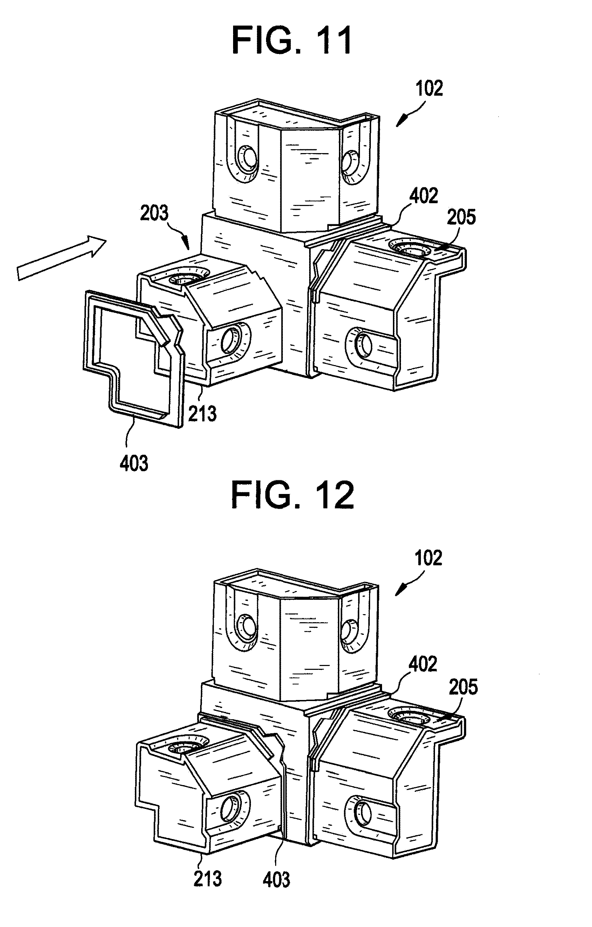

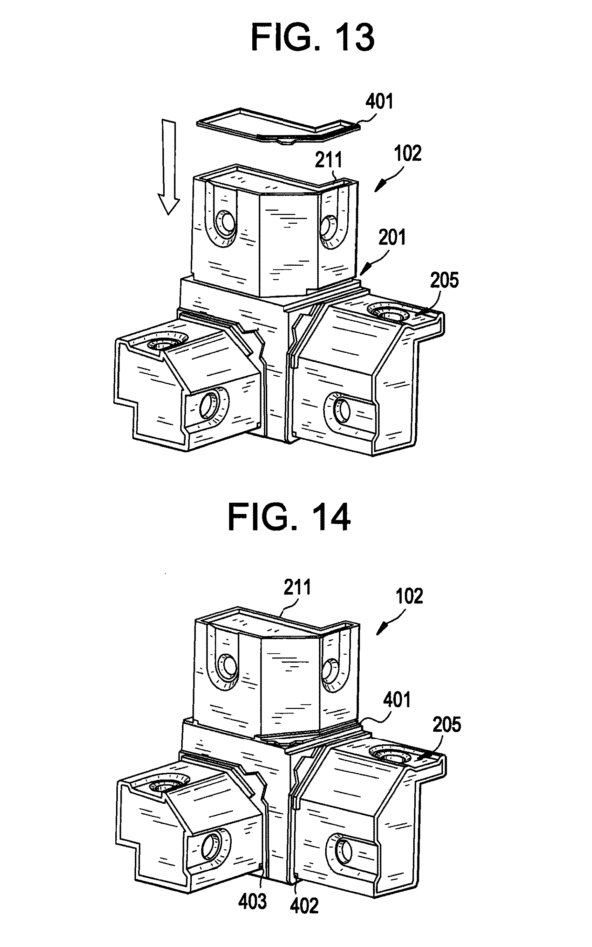

The assembly of either the roof frame portion 112 or the base frame portion 111 includes engaging associated gaskets to gasket retention formations of each protrusion of associated corner support structures. As illustrated in FIGS. 9-10, a gasket 402 is slid over protrusion 212 and into gasket retention formation 202. Further, as illustrated in FIGS. 11-12, a gasket 403 is slid over protrusion 213 and into gasket retention formation 203. Finally, as illustrated in FIGS. 13-14, a gasket 401 is slid over protrusion 211 and into gasket retention formation 201. Thus, an entire corner support structure 102 may be set with appropriate gaskets for frame assembly. It should be readily understood that the gasketed mirror-image symmetrical corner support structure 101 is formed in a similar manner. Thereafter, horizontal support members 104 and 105 may be engaged with appropriately shaped protrusions to form the roof frame portion 112 or the base frame portion 111.

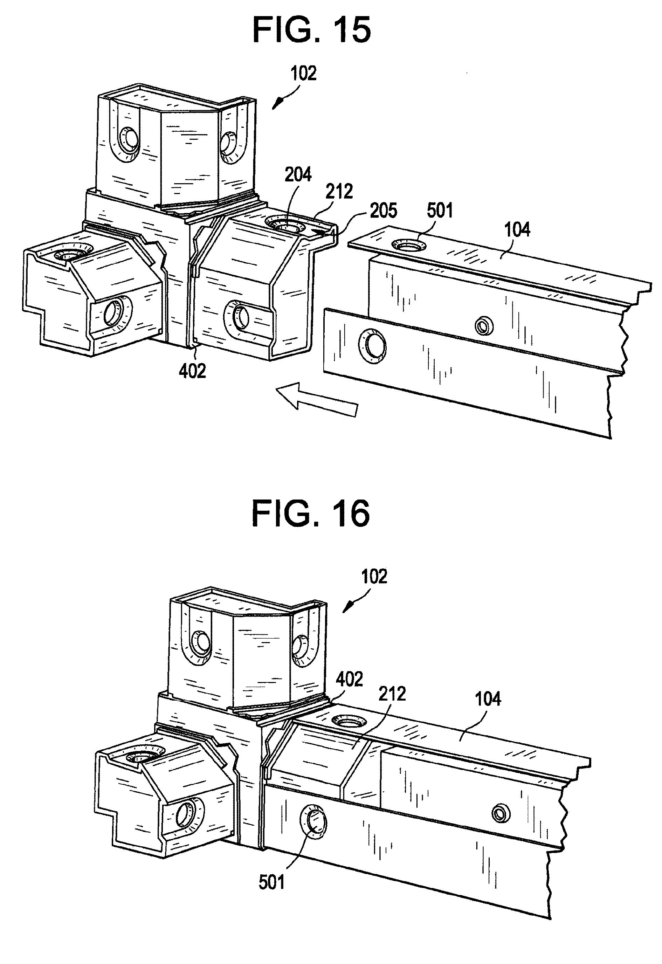

As illustrated in FIGS. 15-18, a horizontal support member 104 is slid over protrusion 212 and engaged with holes 204 and gasket 402. Thereafter, fasteners 170 may pass through fastener hole 501 and fasten into holes 204 to compress gasket 402. Support member engagement and gasket compression is illustrated in FIG. 29.

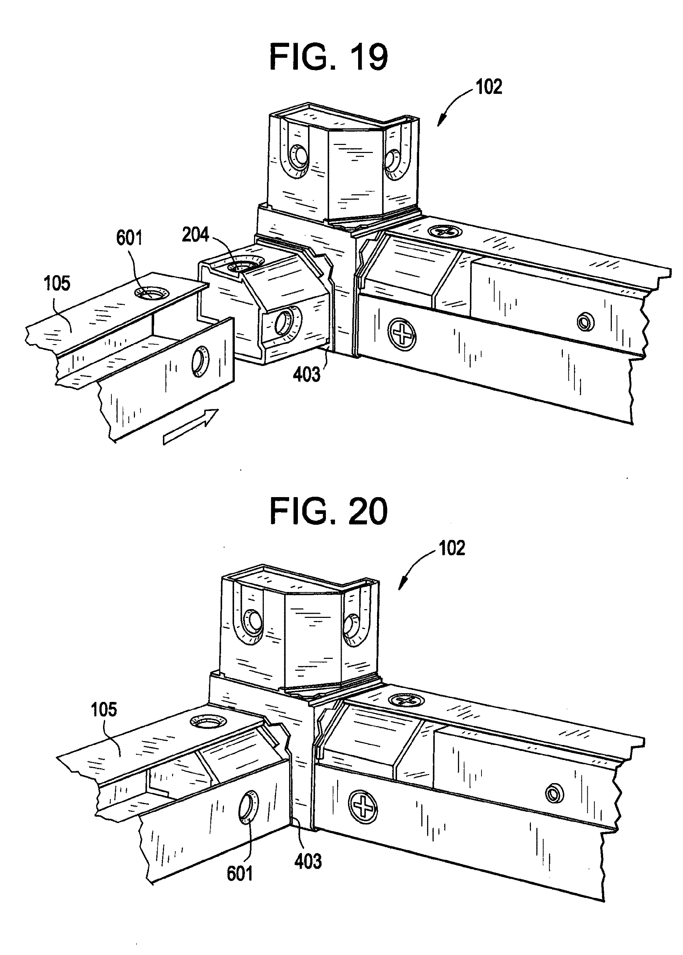

As illustrated in FIGS. 19-22, upon attachment of horizontal support member 104 to corner support structure 102, a horizontal support member 105 is slid over protrusion 213 and engaged with holes 204 and gasket 403. Thereafter, fasteners 170 may pass through holes 601 and engage into holes 204 to compress gasket 403. Support member engagement and gasket compression is illustrated in FIG. 29.

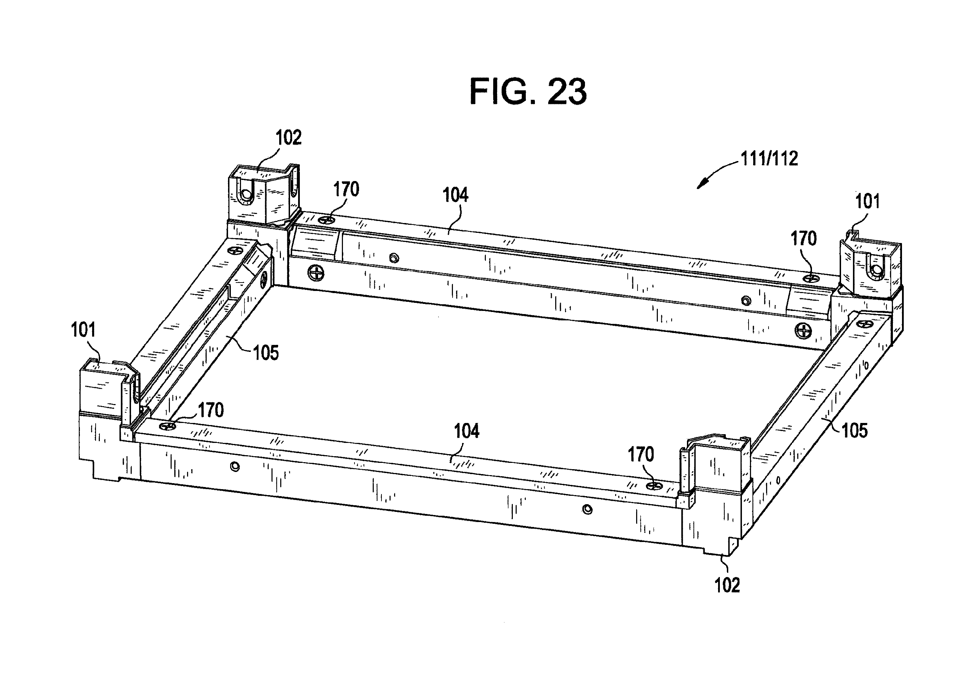

Upon attachment of horizontal support members 104 and 105, gasketed corner support structures 101 may be attached and secured with fasteners 170 form an entire base frame portion 111 and/or roof frame portion 112 as illustrated in FIG. 23. It should be readily understood that the base frame portion 111 and roof frame portion 112 may consist essentially of the same components and require the same methodology of assembly such that FIGS. 9-23 may be used to form both portions.

Upon assembly of a suitable base frame portion 111, vertical support members 106 may be attached to the base frame portion 111. For example, as illustrated in FIGS. 24-27, each of four vertical support members 106 are slid onto respective corner support structures and engaged with holes 204 and gaskets 401. Thereafter, fasteners 170 may pass through holes 701 and engage into holes 204 to compress each gasket 401 at the four corners of the base frame portion 111. Thereafter, a roof frame portion 112 may be attached to the four vertical support members 106 as illustrated in FIG. 28, and secured with fasteners 170 to ensure compression of gaskets 401.

Upon securing the roof frame portion 112 to the vertical support members 106, the entire frame 100 is assembled as illustrated in FIG. 1.

As noted above, compression of each gasket 401, 402, and 403 between each corner support structure and associated horizontal and vertical support members affords appropriate ingress protection. This is illustrated in FIG. 29.

As illustrated in the cross sectional view of FIG. 29, holes 501 and 601 are countersunk and drawn through the material comprising support members 104 and 105, respectively. Therefore, conical protrusions 503 and 603 are arranged on interior surfaces 502 and 602 allowing for engagement with engagement grooves 205 and holes 204 of associated protrusions 212 and 213, respectively. Upon engagement, gaskets 402 and 403 are compressed and deformed along proximate surfaces thereby providing ingress protection. As described above, each engagement groove 205 may be a generally rectangular groove formed on an outer surface of an associated protrusion 212 and 213, extending distally from an associated hole 204. Each engagement groove 205 may surround an associated hole 204. Also, each engagement groove 205 may be configured to engage the countersunk and drawn through-holes 501 and 601 from associated framing support members 104 and 105, respectively. Furthermore, each engagement groove 205 provides for engagement between a hole 204 and the associated through-holes 501 and 601, for example, by ensuring appropriate alignment between holes. It is noted that the same is true for through-holes 701 of vertical support members 106 and associated holes 204, engagement grooves 205, gaskets 401, and protrusions 211. Moreover, although FIG. 29 particularly illustrates the engagement between associated support members and the corner support structure 102, the same holds true for corner support structure 101.

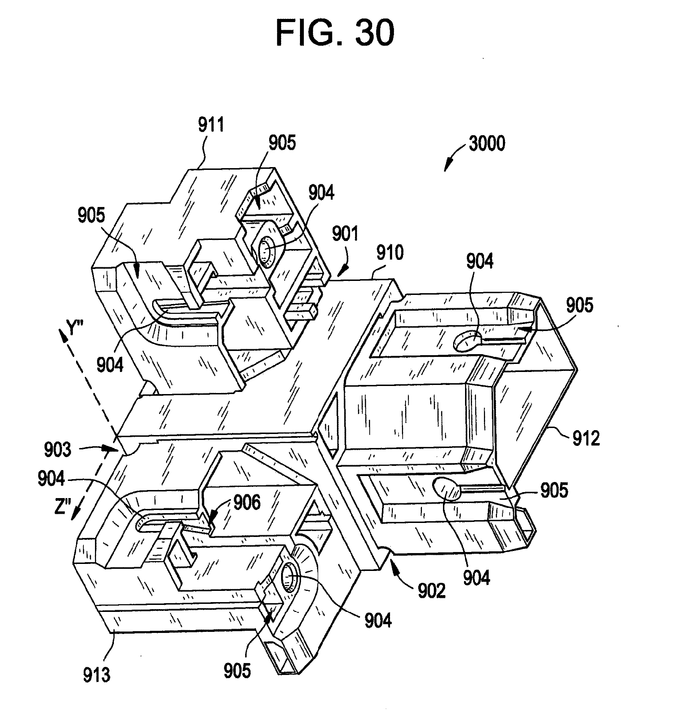

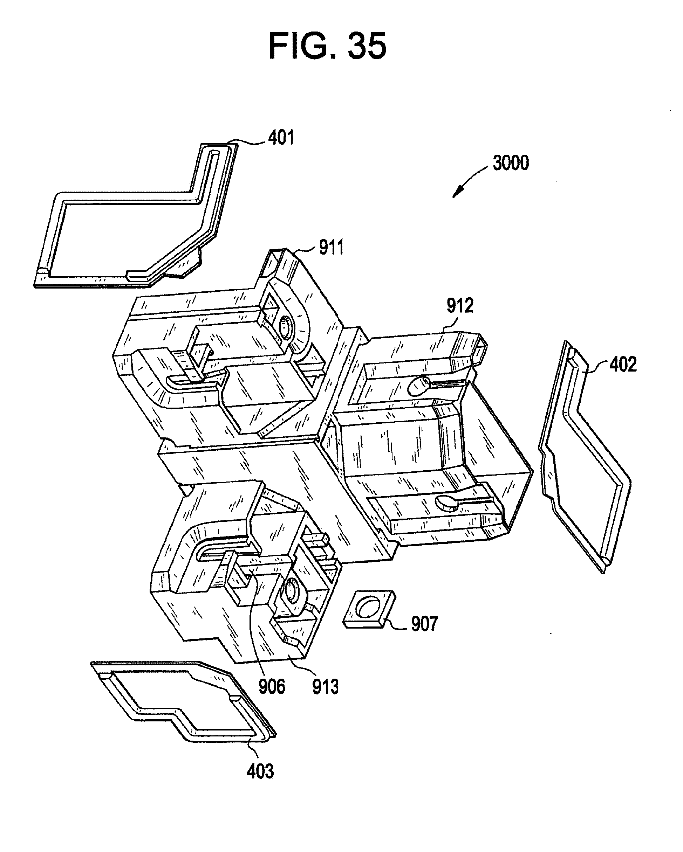

Hereinafter, alternative embodiments of corner support structures are described with reference to FIGS. 30-35.

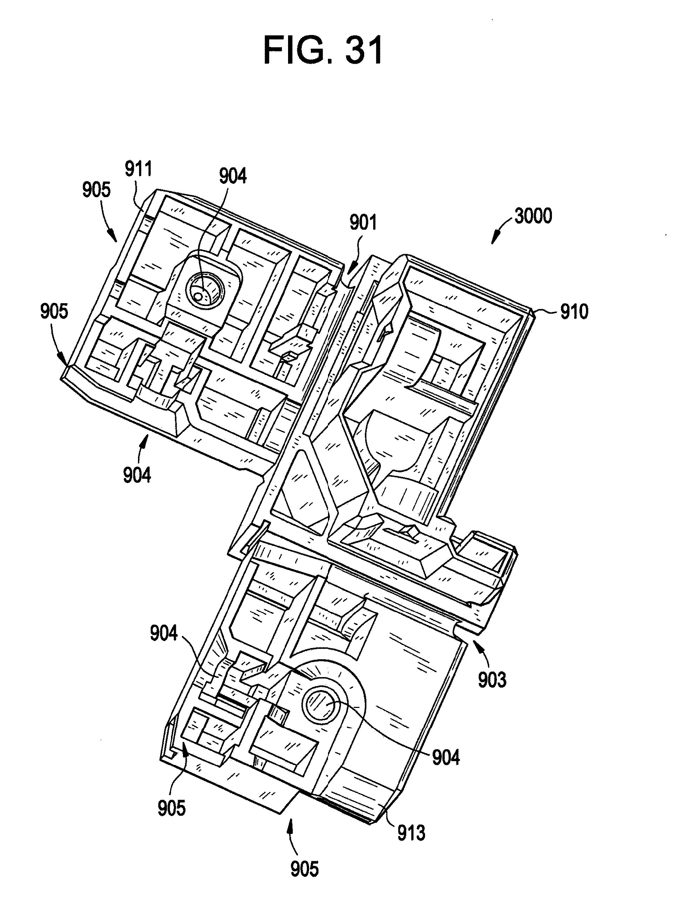

FIG. 30 is a perspective view of an alternative corner support structure 3000 of the supportive frame of the electrical system enclosure of FIG. 1. FIG. 31 is a cross sectional illustration of the alternative corner support structure 3000. The structure 3000 includes a main body 910 and three protrusions 911, 912, and 913 extending therefrom on three main axes, forming a Cartesian corner in three dimensions with each one of the three main axes being substantially perpendicular to its two neighbors. The main body 910 may be of a substantially cubic form, while each of the protrusions 911, 912, and 913 may be shaped according to an associated framing support member such that the associated framing support member may engage therewith. Furthermore, each protrusion 911, 912, and 913 includes an associated gasket retention formation 901, 902, and 903 formed proximate thereto. For example, the protrusion 911 includes a gasket retention formation 901, the protrusion 912 includes a gasket retention formation 902, and the protrusion 913 includes a gasket retention formation 903. Each gasket retention formation may be a generally annular groove encompassing every major surface of an associated protrusion. Therefore, the groove lies on a plane substantially orthogonal to one of the three main axes described above.

Each of the protrusions 911, 912, and 913 includes at least two holes 904 formed therethrough. Each hole 904 may be countersunk to facilitate smooth assembly of the entire frame 100. Moreover, each hole may be surrounded by an engagement groove 905 configured to engage with an associated framing support member. Furthermore, each of the protrusions 911, 912, and 913 include fastener retention channels 906 directly opposing associated holes 904 and engagement grooves 905.

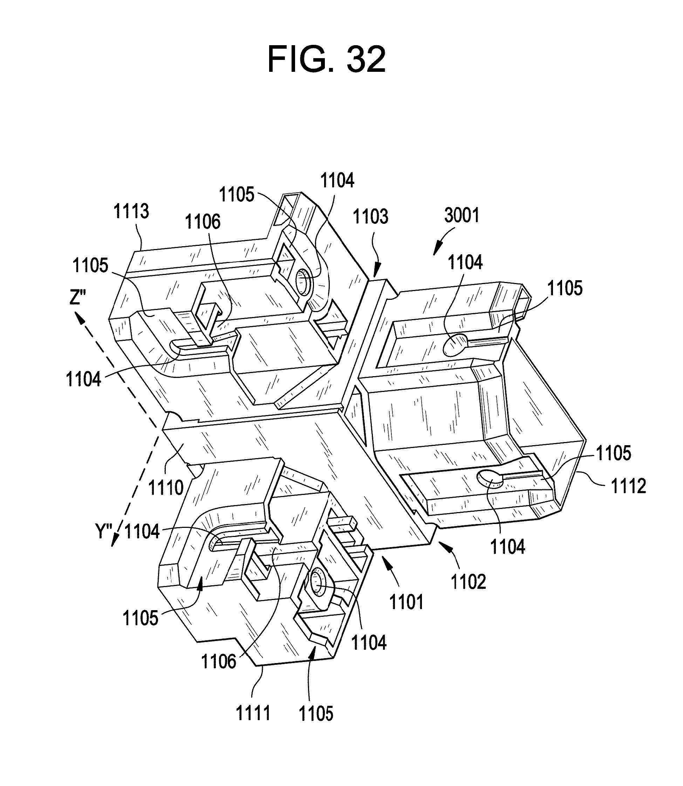

It should be understood that as each of the protrusions 911, 912, and 913 are of a different cross-sectional shape, different corner support structures with mirror-image symmetry are necessary to form opposing corners of the frame 100. For example, the mirror-image symmetry includes a plane of symmetry defined by plane Y"-Z" extending across an outer surface of the main body 910. The plane Y"-Z" is parallel to a first axis defined by the protrusion 911 and parallel to a second axis defined by the protrusion 913. Furthermore, a third axis defined by the protrusion 912 is substantially orthogonal to the plane Y"-Z". The corner support structure 3001 with the mirror-image symmetry is illustrated in FIG. 32.

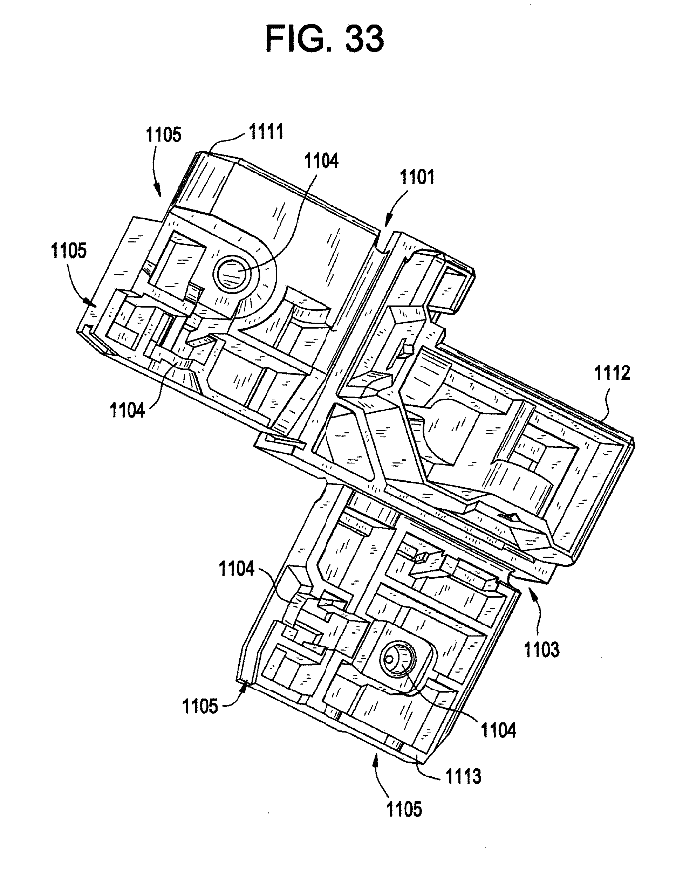

FIG. 32 is a perspective view of an alternative corner support structure 3001 of the supportive frame of the electrical system enclosure of FIG. 1. FIG. 33 is a cross sectional illustration of the alternative corner support structure 3001. The structure 3001 includes a main body 1110 and three protrusions 1111, 1112, and 1113 extending therefrom on three main axes, forming a Cartesian corner in three dimensions with each one of the three main axes being substantially perpendicular to its two neighbors. The main body 1110 may be of a substantially cubic form, while each of the protrusions 1111, 1112, and 1113 may be shaped according to an associated framing support member such that the associated framing support member may engage therewith. Furthermore, each protrusion 1111, 1112, and 1113 includes an associated gasket retention formation 1101, 1102, and 1103 formed proximate thereto. For example, the protrusion 1111 includes a gasket retention formation 1101, the protrusion 1112 includes a gasket retention formation 1102, and the protrusion 1113 includes a gasket retention formation 1103. Each gasket retention formation may be a generally annular groove encompassing every major surface of an associated protrusion. Therefore, the groove lies on a plane substantially orthogonal to one of the three main axes described above.

Each of the protrusions 1111, 1112, and 1113 includes at least two holes 1104 formed therethrough. Each hole 1104 may be countersunk to facilitate smooth assembly of the entire frame 100. Moreover, each hole may be surrounding by an engagement groove 1105 configured to engage with an associated framing support member. Furthermore, each of the protrusions 1111, 1112, and 1113 include fastener retention channels 1106 directly opposing associated holes 1104 and engagement grooves 1105.

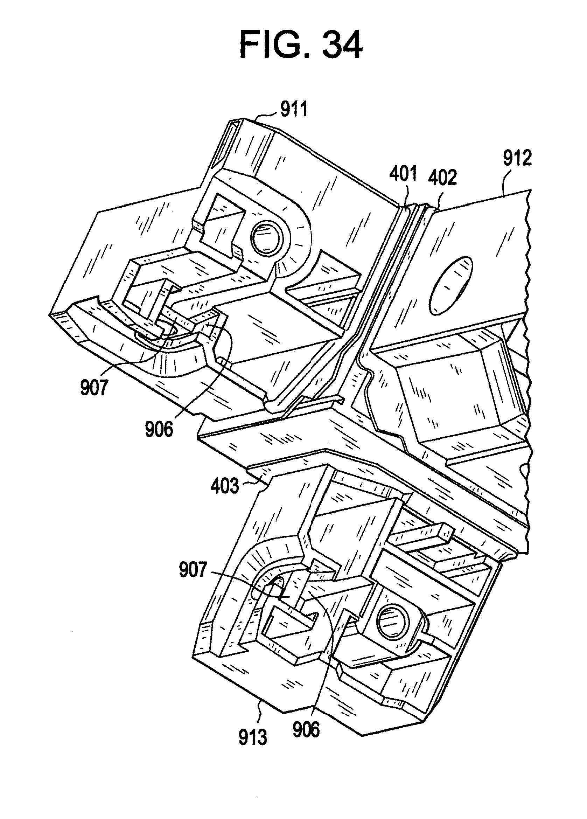

Turning now to FIGS. 34-35, expanded perspective views of the alternate corner support structure 3000 are provided which illustrate the inclusion of annular gaskets 401, 402, and 403, as well as fastener retention portions 907 situated within channels 906 directly opposing associated holes 904. The fastener retention portions 907 may be deformable and configured to receive a fastener. Therefore, upon insertion of appropriate fasteners, a seal may be formed between horizontal and vertical support members and the corner support structure. It should be appreciated that fastener retention portions 907 may also be situated within channels 1106 of the corner support structure 3001.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

Various aspects and embodiments of the present invention are defined by the following numbered clauses:
1. A frame for an enclosure, comprising:
   a first set of corner support structures, wherein each corner support structure of the first set of corner support structures includes,
   a main body,
   a first protrusion arranged to extend from the main body, the first protrusion having a first cross sectional shape and a first annular gasket retention formation arranged thereon, wherein the first protrusion defines a first axis,
   a first annular gasket configured to be arranged on the first annular gasket retention formation,
   a second protrusion arranged to extend from the main body and substantially orthogonal to the first protrusion, the second protrusion having a second cross sectional shape and a second annular gasket retention formation arranged thereon, wherein the second protrusion defines a second axis, and wherein the first axis and the second axis define a plane of symmetry,
   a second annular gasket configured to be arranged on the second annular gasket retention formation,
   a third protrusion arranged to extend from the main body and substantially orthogonal to both the first protrusion and the second protrusion, the third protrusion having a third cross sectional shape and a third annular gasket retention formation arranged thereon, and
   a third annular gasket configured to be arranged on the third annular gasket retention formation; and
   a second set of corner support structures, wherein each corner support structure of the second set of corner support structures has mirror image symmetry about the plane of symmetry of an opposing corner support structure of the first set of corner support structures.
2. The frame of clause 1, further comprising:
   a plurality of vertical support members having a cross sectional shape complementary to the first cross sectional shape and configured to engage with the first annular gasket and the first protrusion of opposing corner support structures of the first and second sets of corner support structures.
3. The frame of clause 1 or clause 2, further comprising:
   a plurality of horizontal support members having a cross sectional shape complementary to the second cross sectional shape and configured to engage with the second annular gasket and the second protrusion of opposing corner support structures of the first and second sets of corner support structures.
4. The frame of any preceding clause, further comprising:
   a second plurality of horizontal support members having a cross sectional shape complementary to the third cross sectional shape and configured to engage with the third annular gasket and the third protrusion of opposing corner support structures of the first and second sets of corner support structures.
5. The frame of any preceding clause, wherein each gasket retention formation of each protrusion of the first and second sets of corner support structures comprises an annular groove.
6. The frame of any preceding clause, wherein each annular groove lies on a plane substantially orthogonal to its associated protrusion.
7. The frame of any preceding clause, wherein each of the first annular gasket, second annular gasket, and third annular gasket is configured to deform and compress within an associated annular groove.
8. The frame of any preceding clause, wherein the first protrusion, the second protrusion, and the third protrusion of each corner support structure of the plurality of corner support structures further comprises at least one hole defined therein.
9. The frame of any preceding clause, further comprising:
   a plurality of vertical support members having a cross sectional shape complementary to the first cross sectional shape and configured to engage with the first annular gasket and the first protrusion of opposing corner support structures of the first and second sets of corner support structures, wherein each vertical support member of the plurality of vertical support members further comprises a hole associated with a hole of the first protrusion of opposing corner support structures of the first and second sets of corner support structures.
10. The frame of any preceding clause, further comprising:
   a plurality of horizontal support members having a cross sectional shape complementary to the second cross sectional shape and configured to engage with the second annular gasket and the second protrusion of opposing corner support structures of the first and second sets of corner support structures, wherein each horizontal support member of the plurality of horizontal support members further comprises a hole associated with a hole of the second protrusion of opposing corner support structures of the first and second sets of corner support structures.
11. The frame of any preceding clause, further comprising:
   a second plurality of horizontal support members having a cross sectional shape complementary to the third cross sectional shape and configured to engage with the third annular gasket and the third protrusion of opposing corner support structures of the first and second sets of corner support structures, wherein each horizontal support member of the second plurality of horizontal support members further comprises a hole associated with a hole of the third protrusion of opposing corner support structures of the first and second sets of corner support structures.
12. The frame of any preceding clause, further comprising a plurality of fasteners arranged within each hole of the plurality of vertical support members, the plurality of horizontal support members, and the second plurality of horizontal support members.
13. The frame of any preceding clause, wherein each of the first annular gasket, second annular gasket, and third annular gasket is configured to deform and compress upon an associated gasket retention formation responsive to the plurality of fasteners.
14. The frame of any preceding clause, wherein an engagement groove is formed on an outer surface of an associated protrusion extending distally from an associated hole.
15. A kit for transport of a disassembled frame for an enclosure, the kit comprising:
   a first set of corner support structures arranged therein, wherein each corner support structure of the first set of corner support structures includes,
   a main body,
   a first protrusion arranged to extend from the main body, the first protrusion having a first cross sectional shape and a first annular gasket retention formation arranged thereon,
   a second protrusion arranged to extend from the main body and substantially orthogonal to the first protrusion, the second protrusion having a second cross sectional shape and a second annular gasket retention formation arranged thereon, a third protrusion arranged to extend from the main body and substantially orthogonal to both the first protrusion and the second protrusion, the third protrusion having a third cross sectional shape and a third annular gasket retention formation arranged thereon;
   a second set of corner support structures arranged therein, wherein each corner support structure of the second set of corner support structures includes,
   a main body,
   a first protrusion arranged to extend from the main body, the first protrusion having a first annular gasket retention formation arranged thereon and being configured to couple to an associated first protrusion of a corner support structure of the first set of corner support structures,
   a second protrusion arranged to extend from the main body and substantially orthogonal to the first protrusion, the second protrusion having a second annular gasket retention formation arranged thereon and being configured to couple to an associated second protrusion of a corner support structure of the first set of corner support structures,
   a third protrusion arranged to extend from the main body and substantially orthogonal to both the first protrusion and the second protrusion, the third protrusion having a third annular gasket retention formation arranged thereon and being configured to couple to an associated third protrusion of a corner support structure of the first set of corner support structures; and
   a plurality of gasket assemblies configured to be arranged therein, wherein each gasket assembly of the plurality of gasket assemblies includes,
   a first annular gasket configured to be arranged on the first annular gasket retention formation of corner support structures of the first and second sets of corner support structures,
   a second annular gasket configured to be arranged on the second annular gasket retention formation of corner support structures of the first and second sets of corner support structures,
   a third annular gasket configured to be arranged on the third annular gasket retention formation of corner support structures of the first and second sets of corner support structures.
16. The kit of any preceding clause, further comprising:
   a plurality of vertical support members arranged therein, each vertical support member of the plurality of vertical support members having a cross sectional shape complementary to the first cross sectional shape and configured to engage with the first annular gasket and the first protrusion of opposing corner support structures of the first and second sets of corner support structures.
17. The kit of any preceding clause, further comprising:
   a plurality of horizontal support members arranged therein, each horizontal support member of the plurality of horizontal support members having a cross sectional shape complementary to the second cross sectional shape and configured to engage with the second annular gasket and the second protrusion of opposing corner support structures of the first and second sets of corner support structures.
18. The kit of any preceding clause, further comprising:
   a second plurality of horizontal support members arranged therein, each horizontal support member of the second plurality of horizontal support members having a cross sectional shape complementary to the third cross sectional shape and configured to engage with the third annular gasket and the third protrusion of opposing corner support structures of the first and second sets of corner support structures.
19. The kit of any preceding clause, wherein each gasket retention formation of each protrusion of the first and second sets of corner support structures comprises an annular groove.
20. The kit of any preceding clause, wherein each annular groove lies on a plane substantially orthogonal to its associated protrusion.

## Claims

1. A frame (100) for an enclosure, comprising:
a first set of corner support structures (101), wherein each corner support structure of the first set of corner support structures includes,
a main body (210),
a first protrusion (211) arranged to extend from the main body, the first protrusion having a first cross sectional shape and a first annular gasket retention formation arranged thereon, wherein the first protrusion defines a first axis,
a first annular gasket configured to be arranged on the first annular gasket retention formation,
a second protrusion (212) arranged to extend from the main body and substantially orthogonal to the first protrusion, the second protrusion having a second cross sectional shape and a second annular gasket retention formation arranged thereon, wherein the second protrusion defines a second axis, and wherein the first axis and the second axis define a plane of symmetry,
a second annular gasket configured to be arranged on the second annular gasket retention formation,
a third protrusion (213) arranged to extend from the main body and substantially orthogonal to both the first protrusion and the second protrusion, the third protrusion having a third cross sectional shape and a third annular gasket retention formation arranged thereon, and
a third annular gasket configured to be arranged on the third annular gasket retention formation; and
a second set of corner support structures (102), wherein each corner support structure of the second set of corner support structures has mirror image symmetry about the plane of symmetry of an opposing corner support structure of the first set of corner support structures.

2. The frame of claim 1, further comprising:
a plurality of vertical support members having a cross sectional shape complementary to the first cross sectional shape and configured to engage with the first annular gasket and the first protrusion of opposing corner support structures of the first and second sets of corner support structures.

3. The frame of claim 1 or claim 2, further comprising:
a plurality of horizontal support members having a cross sectional shape complementary to the second cross sectional shape and configured to engage with the second annular gasket and the second protrusion of opposing corner support structures of the first and second sets of corner support structures.

4. The frame of any preceding claim, further comprising:
a second plurality of horizontal support members having a cross sectional shape complementary to the third cross sectional shape and configured to engage with the third annular gasket and the third protrusion of opposing corner support structures of the first and second sets of corner support structures.

5. The frame of any preceding claim, wherein each gasket retention formation of each protrusion of the first and second sets of corner support structures comprises an annular groove.

6. The frame of any preceding claim, wherein each annular groove lies on a plane substantially orthogonal to its associated protrusion.

7. The frame of any preceding claim, wherein each of the first annular gasket, second annular gasket, and third annular gasket is configured to deform and compress within an associated annular groove.

8. The frame of any preceding claim, wherein the first protrusion, the second protrusion, and the third protrusion of each corner support structure of the plurality of corner support structures further comprises at least one hole defined therein.

9. The frame of any preceding claim, further comprising:
a plurality of vertical support members having a cross sectional shape complementary to the first cross sectional shape and configured to engage with the first annular gasket and the first protrusion of opposing corner support structures of the first and second sets of corner support structures, wherein each vertical support member of the plurality of vertical support members further comprises a hole associated with a hole of the first protrusion of opposing corner support structures of the first and second sets of corner support structures.

10. The frame of any preceding claim, further comprising:
a plurality of horizontal support members having a cross sectional shape complementary to the second cross sectional shape and configured to engage with the second annular gasket and the second protrusion of opposing corner support structures of the first and second sets of corner support structures, wherein each horizontal support member of the plurality of horizontal support members further comprises a hole associated with a hole of the second protrusion of opposing corner support structures of the first and second sets of corner support structures.

11. The frame of any preceding claim, further comprising:
a second plurality of horizontal support members having a cross sectional shape complementary to the third cross sectional shape and configured to engage with the third annular gasket and the third protrusion of opposing corner support structures of the first and second sets of corner support structures, wherein each horizontal support member of the second plurality of horizontal support members further comprises a hole associated with a hole of the third protrusion of opposing corner support structures of the first and second sets of corner support structures.

12. The frame of any preceding claim, further comprising a plurality of fasteners arranged within each hole of the plurality of vertical support members, the plurality of horizontal support members, and the second plurality of horizontal support members.

13. The frame of any preceding claim, wherein each of the first annular gasket, second annular gasket, and third annular gasket is configured to deform and compress upon an associated gasket retention formation responsive to the plurality of fasteners.

14. The frame of any preceding claim, wherein an engagement groove is formed on an outer surface of an associated protrusion extending distally from an associated hole.

15. A kit for transport of a disassembled frame for an enclosure, the kit comprising:
a first set of corner support structures arranged therein, wherein each corner support structure of the first set of corner support structures includes,
a main body,
a first protrusion arranged to extend from the main body, the first protrusion having a first cross sectional shape and a first annular gasket retention formation arranged thereon,
a second protrusion arranged to extend from the main body and substantially orthogonal to the first protrusion, the second protrusion having a second cross sectional shape and a second annular gasket retention formation arranged thereon, a third protrusion arranged to extend from the main body and substantially orthogonal to both the first protrusion and the second protrusion, the third protrusion having a third cross sectional shape and a third annular gasket retention formation arranged thereon;
a second set of corner support structures arranged therein, wherein each corner support structure of the second set of corner support structures includes,
a main body,
a first protrusion arranged to extend from the main body, the first protrusion having a first annular gasket retention formation arranged thereon and being configured to couple to an associated first protrusion of a corner support structure of the first set of corner support structures,
a second protrusion arranged to extend from the main body and substantially orthogonal to the first protrusion, the second protrusion having a second annular gasket retention formation arranged thereon and being configured to couple to an associated second protrusion of a corner support structure of the first set of corner support structures,
a third protrusion arranged to extend from the main body and substantially orthogonal to both the first protrusion and the second protrusion, the third protrusion having a third annular gasket retention formation arranged thereon and being configured to couple to an associated third protrusion of a corner support structure of the first set of corner support structures; and
a plurality of gasket assemblies configured to be arranged therein, wherein each gasket assembly of the plurality of gasket assemblies includes,
a first annular gasket configured to be arranged on the first annular gasket retention formation of corner support structures of the first and second sets of corner support structures,
a second annular gasket configured to be arranged on the second annular gasket retention formation of corner support structures of the first and second sets of corner support structures,
a third annular gasket configured to be arranged on the third annular gasket retention formation of corner support structures of the first and second sets of corner support structures.
